# EUROPÄISCHE PATENTANMELDUNG

(11) **EP 0 965 498 A2**
(43) Veröffentlichungstag der Anmeldung: **22.12.1999**
(21) Anmeldenummer: 99111082.6
(22) Anmeldetag: 17.06.1999
(51) Int. Cl.: B60R 21/20

(54) **Vorrichtung und Verfahren zum Falten eines Gassacks**

(30) Priorität: 19.06.1998 DE 29811042 U
(71) Anmelder: TRW Automotive Safety Systems GmbH & Co. KG, 63743 Aschaffenburg (DE)
(72) Erfinder: Weis, Andreas, 63739 Aschaffenburg (DE)
(74) Vertreter: Sties, Jochen

(57) **Zusammenfassung**

Eine Vorrichtung zum Einbringen eines Gassacks (7) in einen topfförmigen Aufnahmebehälter (3) mit bodenseitiger Montageöffnung (5) für die Anordnung eines Gasgenerators ist gekennzeichnet durch ein rohrförmiges Gehäuse (1) mit an die Einbringöffnung (2) des Aufnahmebehälters (3) angepaßten Querschnitt und einen im Gehäuse (1) axial hin und her verschiebbaren Stempel (4) bzw. Kolben. Ein Verfahren zum Falten eines Gassacks (7) ist dadurch gekennzeichnet, daß der Gassack in einem rohrförmigen Gehäuse (1) angeordnet wird, daß ein Körper (9) in den Gassack eingeführt wird, der als Dummy für einen später zu montierenden Gasgenerator dient, und daß der Gassack (7) um den Körper (9) herum zusammengefaltet wird.

## Beschreibung

Die Erfindung betrifft eine Vorrichtung und ein Verfahren zum Falten eines Gassacks für ein Fahrzeuginsassen-Rückhaltesystem.

Rasch aufblasbare Gassäcke dienen in Fahrzeugen als Aufprallschutz für die Insassen, wobei über Sensoren Fahrzeugverzögerungen, die einen kritischen Wert überschreiten, ermittelt werden und durch eine elektronische Steuereinrichtung ein Gasgenerator aktiviert wird, der innerhalb sehr kurzer Zeit ein ausreichend großes Gasvolumen zur Füllung des Gassacks zur Verfügung stellt. Die Gassäcke sind im Fahrzeug so angeordnet, daß ein direktes Aufprallen der Insassen aufdie Fahrzeugkarosserieteile bei einem Unfall verhindert wird.

Zur Unterbringung der Gassäcke im Kraftfahrzeug werden sie auf ein möglichst geringes Volumen zusammengefaltet, wobei die Faltung so konzipiert werden muß, daß das rasche Aufblasen des Gassacks nicht behindert oder verzögert wird. Für einen Frontalaufprall des Fahrzeuges müssen die Gassäcke innerhalb von 30 - 40 ms aufblasbar sein, für einen Seitenaufprall stehen nicht mehr als 10 ms zur Verfügung.

Für das Einfalten der Gassäcke sind verschiedene Methoden bekannt geworden. Sie haben alle den Nachteil, daß für das einwandfreie Einfalten verhältnismäßig komplizierte Vorrichtungen erforderlich sind und daß der Einfaltvorgang selbst sehr zeitaufwendig ist.

Der Erfindung liegt die Aufgabe zugrunde, für das Einbringen eines Gassacks in einen topfförmigen Aufnahmebehälter mit bodenseitiger Montageöffnung für die Anordnung eines Gasgenerators eine Vorrichtung vorzuschlagen, die im Aufbau wesentlich einfacher ist, kürzere Taktzeiten für das Einfalten erlaubt und leicht an unterschiedliche Einbauverhältnisse für den Gassack anpaßbar ist. Außerdem soll die Vorrichtung in automatische Fertigungsstraßen integrierbar sein und bei geringem Wartungsaufwand über möglichst lange Betriebszeiten störungsfrei arbeiten.

Zur Lösung dieser Aufgabe wird erfindungsgemäß eine Vorrichtung zum Einbringen eines Gassacks in einen topfförmigen Aufnahmebehälter (3) mit bodenseitiger Montageöffnung für die Anordnung eines Gasgenerators vorgeschlagen, bei der ein rohrförmiges Gehäuse mit an die Einbringöffnung des Aufnahmebehälters angepaßtem Querschnitt und einem im Gehäuse axial hin und her verschiebbaren Stempel bzw. Kolben vorhanden ist. Es hat sich herausgestellt, daß man mit einer derartigen Vorrichtung einen zunächst gestreckt untergebrachten Gassack durch einfaches Einschieben des Stempels in eine gewünschte Packform zusammendrücken kann, ohne daß es - wie bisher üblich - erforderlich ist, ganz bestimmte Faltungen in einer vorgegebenen zeitlichen Abfolge durchführen zu müssen. Im Wechselspiel zwischen der über den Stempel von außen aufgebrachten Kraft und den Rückstellkräften des Gewebematerials für den Gassack wird eine willkürliche, im einzelnen nicht vorhersagbare Faltung des Gassacks in den zur Verfügung stehenden Raum im topfförmigen Aufnahmebehälter erreicht, die sich innerhalb der zur Verfügung stehenden Zeit für das rasche Aufblasen des Gassacks problemlos entfalten läßt, wie durch zahlreiche Versuche nachgewiesen werden konnte. Es leuchtet ohne weiteres ein, daß die einfache Axialverschiebung eines Stempels in einem rohrförmigen Gehäuse wesentlich einfacher zu realisieren als ein definiertes Faltprogramm, für das eine wesentlich kompliziertere Vorrichtung erforderlich ist. Bei der erfindungsgemäßen Vorrichtung muß lediglich der Gassack in das rohrförmige Gehäuse eingebracht, das rohrförmige Gehäuse in den topfförmigen Aufnahmebehälter eingesteckt und danach der Gassack durch Verschieben des Stempels komprimiert werden.

Vorzugsweise ist eine erfindungsgemäße Vorrichtung dadurch gekennzeichnet, daß ein durch die Montageöffnung einsetzbarer Körper vorgesehen ist, der den im Aufnahmebehälter für einen Gasgenerator vorgesehenen Raum ausfüllt. Dieser Körper dient quasi als Platzhalter für einen Gasgenerator, der aus Sicherheitsgründen erst als letztes Bauteil montiert wird.

Vorzugsweise bildet der Körper den oberen Teil einer koaxial zum Stempel hin und her verschiebbaren Stange. Auf diese Weise kann der Körper gleichzeitig dazu genutzt werden, den Gassack vor dem Falten im Inneren des Aufnahmebehälters in eine langgestreckte Form zu bringen.

Ein erfindungsgemäßes Verfahren zum Falten eines Gassacks ist dadurch gekennzeichnet, daß der Gassack in einem rohrförmigen Gehäuse angeordnet wird, daß ein Körper in den Gassack eingeführt wird, der als Dummy für einen später zu montierenden Gasgenerator dient, und daß der Gassack um den Körper herum zusammengefaltet wird. Auf diese Weise ergeben sich die Vorteile, die bereits oben hinsichtlich der Vorrichtung zum Falten erläutert wurden.

Vorteilhafte Weiterbildungen und Abwandlungen des Erfindungsgedankens sind in den Unteransprüchen beschrieben.

Die Erfindung wird nachfolgend anhand eines Ausführungsbeispiels beschrieben, das in den Figuren 1 bis 5 dargestellt ist. In den Figuren zeigen:
- Fig. 1 einen Vertikalschnitt durch eine erste Ausführungsform der erfindungsgemäßen Vorrichtung;
- Fig. 2 einen vertikalen Teilschnitt durch eine zweite Ausführungsform;
- Fig. 3 einen vertikalen Teilschnitt durch eine dritte Ausführungsform;
- Fig. 4 einen vertikalen Teilschnitt durch eine Ausführungsform mit eingebautem Gasgenerator; und
- Fig. 5 einen Teilschnitt durch eine Ausführungsform für das pneumatische Aufblasen des Gassacks im rohrförmigen Gehäuse.

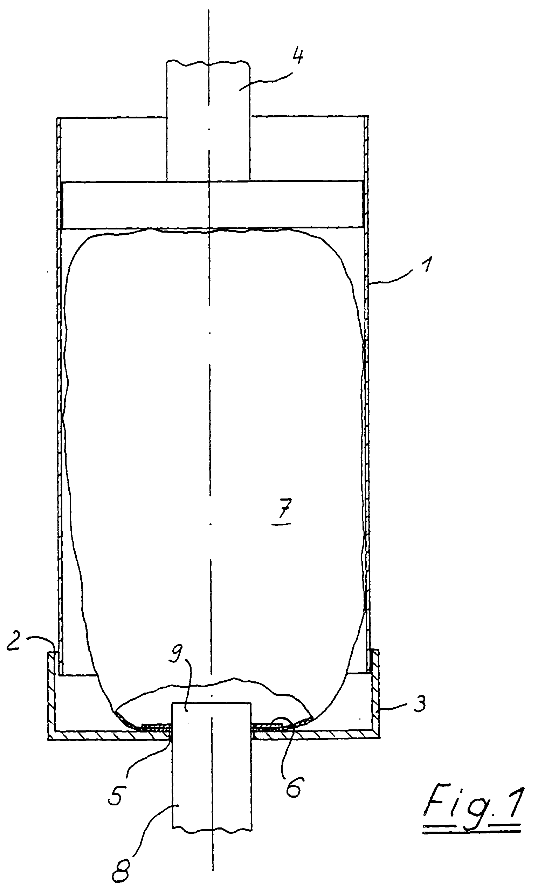

Aus der Schnittdarstellung gemäß Fig. 1 ist ersichtlich, wie ein rohrförmiges Gehäuse 1 in die Einbringöffnung 2 eines Aufnahmebehälters 3 eingesteckt ist. Die Einbringöffnung 2 des Aufnahmebehälters 3 kann im Hinblick auf die Einbauverhältnisse im Kraftfahrzeug unterschiedliche Querschnitte aufweisen. Zur Realisierung des Erfindungsgedankens ist es lediglich erforderlich, daß das rohrförmige Gehäuse und selbstverständlich auch der darin axial verschiebliche Stempel 4 einen an die Einbringöffnung 2 angepaßten Querschnitt aufweisen. Bevor das rohrförmige Gehäuse 1 in den Aufnahmebehälter 3 eingesteckt wird, muß ein Gassack 7 in das rohrförmige Gehäuse 1 eingebracht werden. Derartige Gassäcke sind üblicherweise mit einem Halteblech 6 ausgestattet, wobei der Aufnahmebehälter 3, der Gassack 7 und das Halteblech 6 im wesentlichen übereinstimmende Montageöffnungen für die Anordnung eines Gasgenerators aufweisen. Der Gassack 7 wird zwischen dem Halteblech 6 und dem Boden des Aufnahmebehälters 3 eingeklemmt, wobei für die Fixierung des Haltebleches 6 relativ zum Aufnahmebehälter 3 verschiedene Maßnahmen in Betracht kommen können. Da aus sicherheitstechnischen Gründen der Gasgenerator meistens erst später montiert wird, ist bei der erfindungsgemäßen Vorrichtung ein durch die Montageöffnung 5 des Aufnahmebehälters 3 einsetzbarer Körper 9 vorgesehen, der beim Ausführungsbeispiel gemäß Fig. 1 den oberen Teil einer koaxial zum Stempel 4 hin und her verschiebbaren Stange 8 bildet und als Dummy wirkt. Diese Stange weist vorzugsweise eine solche Länge auf, daß mit ihr der in das rohrförmige Gehäuse 1 eingebrachte Gassack 7 in die dargestellte gestreckte Form gebracht werden kann. Für das Entfalten des Gassacks ist es nämlich wichtig, daß der der Montageöffnung 5 gegenüberliegende Teil des Gassackgewebes vor dem Zusammenfalten etwa in der Mitte des Stempels 4 anliegt. Anderenfalls könnte dieser Bereich bei dem willkürlichen Zusammenfalten in der erfindungsgemäßen Vorrichtung so eingebunden werden, daß das Entfalten behindert oder verzögert wird. Selbstverständlich ist es auch möglich, den oberen zentralen Teil des Gassacks 7 zwischen dem Stempel 4 und dem Körper 9, der den oberen Teil der Stange 8 bildet, einzuklemmen und die Stange 8 beim Zusammenfalten des Gassacks 7 gleichsinnig mit dem Stempel 4 herunterzufahren, bis in die dargestellte Endposition, durch die der für den Gasgenerator benötigte Freiraum definiert wird.

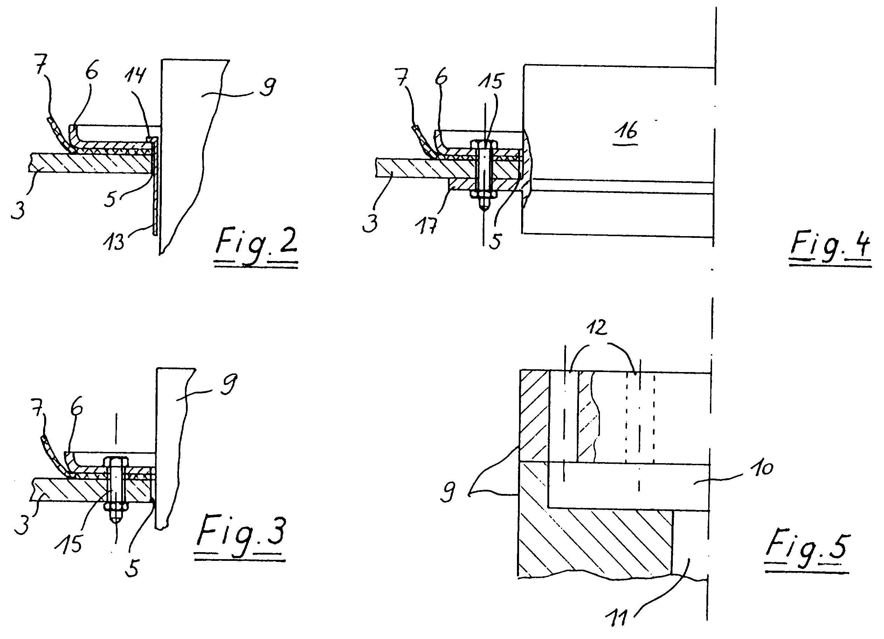

Die Stange 8 dient dabei gleichzeitig zur radialen Ausrichtung des Haltebleches 6 und des Gassacks 7 hinsichtlich der Montageöffnung 5 im Aufnahmebehälter 3. Die Fixierung des Halteblechs 6 bezüglich des Aufnahmebehälters 3 und das dadurch erfolgte Einklemmen des Gassacks 7 ist in Fig. 1 nicht näher dargestellt. Neben den in den Figuren 2 und 3 dargestellten Möglichkeiten käme hier auch eine Fixierung mittels Magnetkräften in Betracht, sofern geeignete Materialien ausgewählt werden.

Bei der Ausführungsform gemäß Fig. 2 ist das Halteblech 6 randseitig nach oben umgebördelt, um ein scharfkantiges Einklemmen des Gassacks 7 zu vermeiden. Zwischen dem lediglich angedeuteten Körper 9 und der Montageöffnung 5 des Aufnahmebehälters 3 ist ein Greifer 13 mit radial nach außen stehendem Haken 14 eingeführt. Damit kann das Halteblech 6 während des Faltvorgangs gegen den Aufnahmebehälter 3 angedrückt werden.

Bei der Ausführungsform gemäß Fig. 3 werden zur Fixierung des Haltebleches 6 am Aufnahmebehälter 3 Befestigungsschrauben 15 verwendet, wie sie üblicherweise auch für die Befestigung eines Gasgenerators (vergl. Fig. 4) und für das Einklemmen des Gassacks 7 zwischen dem Halteblech 6 und dem Aufnahmebehälter 3 benutzt werden. Die Anordnung der Montageöffnung 5 und des Körpers 9 unterscheiden sich nicht von derjenigen in Fig. 1.

Bei der Ausführungsform gemäß Fig. 4 ist der Gasgenerator 16 mit einem radial nach außen vorstehenden Flansch 17 bereits vor dem Zusammenfalten des Gassacks 7 mit dem Aufnahmebehälter 3 verbunden, wobei die Befestigungsschrauben 15 gleichzeitig dazu dienen, das Halteblech 6 gegen den Aufnahmebehälter 3 anzupressen und den Gassack 7 einzuklemmen. Die Montageöffnung 5 entspricht derjenigen in Fig. 1 und Fig. 3.

Aus Fig. 5 ist ersichtlich, wie der Körper 9, der den oberen Teil einer Stange 8 bildet, gestaltet sein kann, wenn der Gassack 7 im rohrförmigen Gehäuse 1 mittels Druckluft in die gestreckte Form gebracht werden soll. Der Körper 9 ist dann vorzugsweise zweiteilig ausgebildet, wobei ein Hohlraum 10 über einen Anschlußkanal 11 einerseits mit einer Druckgasquelle verbindbar ist und andererseits mit mindestens einer Auslaßöffnung 12 ausgestattet ist, über die der Gassack 7 aufblasbar ist. Insbesondere bei dieser Ausführungsform kann es zweckmäßig sein, wenn der Stempel 4 auf seiner Vorderseite eine Haltevorrichtung zum Halten eines bestimmten Oberflächenbereiches des Gassacks 7 aufweist. Diese Haltevorrichtung kann beispielsweise aus einem mit einer Unterdruckquelle verbindbaren Saugnapfbestehen.

Zur Komplettierung der erfindungsgemäßen Vorrichtung ist selbstverständlich noch ein Maschinengestell erforderlich, in dem die erfindungswesentlichen Bauteile positioniert und gehalten sind und in dem auch die notwendigen Antriebe und Schaltungseinrichtungen angeordnet sind. Insoweit handelt es sich aber um übliche maschinentechnische Einrichtungen, die dem Fachmann geläufig sind und daher nicht näher dargestellt sind.

## Patentansprüche

1. Vorrichtung zum Einbringen eines Gassacks in einen topfförmigen Aufnahmebehälter (3) mit bodenseitiger Montageöffnung für die Anordnung eines Gasgenerators, gekennzeichnet durch ein rohrförmiges Gehäuse (1) mit an die Einbringöffnung (2) des Aufnahmebehälters (3) angepaßten Querschnitt und einen im Gehäuse (1) axial hin und her verschiebbaren Stempel (4) bzw. Kolben.

2. Vorrichtung nach Anspruch 1, dadurch gekennzeichnet, daß ein durch die Montageöffnung (5) einsetzbarer Körper (9) vorgesehen ist, der den im Aufnahmebehälter (3) für einen Gasgenerator vorgesehenen Raum ausfüllt.

3. Vorrichtung nach Anspruch 2, dadurch gekennzeichnet, daß der Körper (9) den oberen Teil einer koaxial zum Stempel (4) hin und her verschiebbaren Stange (8) bildet.

4. Vorrichtung nach Anspruch 2, dadurch gekennzeichnet, daß der Körper (9) einen Hohlraum (10) aufweist, der über einen Anschlußkanal (11) mit einer Druckgasquelle verbindbar ist und der mit mindestens einer Auslaßöffnung (12) ausgestattet ist, über die ein in das Gehäuse (1) eingebrachter Gassack (7) aufblasbar ist.

5. Vorrichtung nach einem der Ansprüche 1 bis 4, dadurch gekennzeichnet, daß Mittel vorgesehen sind, durch die ein im Gassack (7) angeordnetes Halteblech (6) mit einer Montageöffnung für einen Gasgenerator koaxial zur Montageöffnung (5) im Aufnahmebehälter (7) fixierbar ist.

6. Vorrichtung nach Anspruch 5, dadurch gekennzeichnet, daß wenigstens zwei durch die Montageöffnung (5) einführbare Greifer (13) mit radial nach außen vorstehenden Haken (14) vorgesehen sind.

7. Vorrichtung nach Anspruch 5, dadurch gekennzeichnet, daß am Halteblech (6) Befestigungsschrauben (15) angebracht sind und daß diese Befestigungsschrauben (15) zur Fixierung des Halteblechs (6) am Aufnahmebehälter (3) benutzt werden.

8. Vorrichtung nach einem der Ansprüche 1 bis 7, dadurch gekennzeichnet, daß anstelle des Körpers (9) ein Gasgenerator (16) in die Montageöffnung (5) einsetzbar ist, dessen radial nach außen weisender Flansch (17) mit dem Aufnahmebehälter (3) und dem Halteblech (6) des Gassacks (7) verbindbar ist.

9. Vorrichtung nach Anspruch 8, dadurch gekennzeichnet, daß der Stempel (4) auf seiner Vorderseite eine Haltevorrichtung zur Erfassung eines bestimmten Oberflächenbereiches des Gassacks (7) aufweist.

10. Vorrichtung nach Anspruch 9, dadurch gekennzeichnet, daß die Halteeinrichtung einen mit einer Unterdruckquelle verbindbaren Saugnapf aufweist.

11. Verfahren zum Falten eines Gassacks, insbesondere mittels einer Vorrichtung nach einem der vorhergehenden Ansprüche, dadurch gekennzeichnet, daß der Gassack in einem rohrförmigen Gehäuse angeordnet wird, daß ein Körper in den Gassack eingeführt wird, der als Dummy für einen später zu montierenden Gasgenerator dient, und daß der Gassack um den Körper herum zusammengefaltet wird.

12. Verfahren nach Anspruch 11, dadurch gekennzeichnet, daß der Gassack mittels des Körpers innerhalb des Gehäuses vor dem Falten in eine gestreckte Form gebracht wird.
